# EUROPEAN PATENT SPECIFICATION

(11) **EP 2 580 168 B1**
(45) Date of publication and mention of the grant of the patent: **07.05.2014**
(21) Application number: 10749624.2
(22) Date of filing: 09.08.2010
(51) Int. Cl.: C02F 9/00, C02F 1/20, C02F 1/28, C02F 1/38, C02F 1/52, C02F 1/74, C02F 101/20, C02F 103/06, C02F 101/00

(54) **METHOD FOR REMOVAL OF RADIONUCLIDES FROM FERROUS GROUND WATER**
VERFAHREN ZUR BESEITIGUNG VON RADIONUKLIDEN AUS EISENHALTIGEM GRUNDWASSER
PROCÉDÉ D'ÉLIMINATION DES RADIONUCLÉIDES CONTENUS DANS UNE EAU FERRUGINEUSE SOUTERRAINE

(30) Priority: 11.06.2010 EE 201000052
(43) Date of publication of application: 17.04.2013
(73) Proprietor: Water Technology Partners Oü, 10621 Tallinn (EE)
(72) Inventor: KIVIMÄE, Tiit, EE11912 Tallinn (EE)
(74) Representative: Toome, Jürgen
(86) International application number: PCT/EP2010/061529
(87) International publication number: WO 2011/154059

(56) References cited:
- US-A- 5 330 658
- US-A1- 2005 271 575
- US-A1- 2009 204 419
- M. Loos: "Colloid-facilitated contaminant transport inanoxic aquifers", Department of Environmental Sciences, ETH Zuerich , 22 April 2009 (2009-04-22), pages 1-27, XP002626373, Retrieved from the Internet: URL:http://www.ibp.ethz.ch/research/aquati cchemistry/teaching/archive_past_lectures/ term_paper_08_09/HS08_Loos_rev_termpaper_m s.pdf [retrieved on 2011-03-04]

## Description

### Technical Field

The present invention relates to a systems for purification of water and specifically to a method for reducing a radioactivity caused by radionuclides containing in the ferrous groundwater. Specifically, the present invention relates to a method for removing of radionuclides from a groundwater, said method enables convenient, simple and relatively low-priced way for optimizing removal of iron, manganese, H₂S, and sulfides so that in the process maximum quantity of radionuclide (Rn, Ra²²⁶ and Ra²²⁸) is separated.

### Background Art

Humans can survive without water only for 72 hours. Clean drinking water and supply of thereof to the public is very important. The quality of drinking water is generally measured by its content of iron, manganese, chlorides and sulfates, by the pH level, color, turbidity and electrical conductivity parameters. In some areas the problem arises from groundwater layers, where said ground water has a concentration of radionuclides above the limits. Near the surface of the ground there is an oxygen rich zone, where predominantly oxidizing conditions prevale, containing both nitrate and sulfate ions.

As a depth increases, free oxygen disappears from the water, and microorganisms use the oxygen from nitrate and sulfate ions and reducing conditions start to prevale. Accordingly dissolved manganese and iron, dicomposed sulphide and methane emerge in the water. Therefore water of deep aquifers contains often too much iron, manganese, and hydrogen sulphide and ammonium ions to be used as a drinking water.

US2009/204419A1 discloses the production of drinking or irrigation water free from radioactive components and heavy metals.

Colloid-facilitated contaminant transport in anoxic aquifers is discussed in the document by the author Martin Loos: "Colloid-facilitated contaminant transport innoxic aquifers", Department of environmental Sciences, ETH Zuerich, 22 April 2009, p. 1-27.

Iron content is a problematic component of the drinking water, where for example the iron concentration of groundwater in Estonia is in some places very high (even more than 5 mg/l). The elevated iron content of drinking water impairs the organoleptic properties of water; in particular it may be associated with cloudiness and unpleasant taste of water, yellowish color of the water and brown sludge. A high content of iron in drinking water can cause a positive iron balance and an oxidative stress, which is considered a cause for a number of diseases, such as inflammation, cardiovascular diseases, diabetes, cancer and other.

From radioactive elements ground water contains mostly elements from uranium decay series: uranium, radium and radon. The content of radionuclides in ground water originates from the base rock, therefore the higher levels of radionuclides in the ground water relates to the water originating from the Cambrian-Vendian water aquifers.

There are many known methods for elimination of radioactivity in the water, such as lime treatment, ion exchange, reverse osmosis, electrodialysis and sorption. In the USA for removal of radon aeration as well as adsorption with activated carbon is used.

The publication WO9948588 describes a method and system for purifying water by means of gas flow, when the water to be purified is aerated by the so-called Mazzei injector and as a result dissolved volatile contaminants are separated from the water.

The document US6531064 describes a method for removing radionuclides from ground water, when zeolites are used for filtering.

The document WO2004/049352A1 describes filtering systems combined with ion-exchangers.

The document RU2088300C1 described a two-stage filtering system to reduce radioactivity in drinking water.

The document RU2099803C1 describes a sorption-based purification method.

The document RU2330339C1 describes a method for wastewater treatment of nuclear power plants, when porous electrodes are used.

None of the above-mentioned solutions solves removal of radioactive nuclides, i.e. radionuclides together with removal of iron and manganese from the drinking water.

The object of the invention is to provide a method for removal of iron and manganese together with the removal of radionuclides from ferrous ground water.

### Disclosure of Invention

The present method allows removal of radioactive nuclides of Ra and U from ferrous ground water, such as from the ground water of the North-Estonian Cambrian-Vendian water aquifers. The method is intended to prepare the drinking water for the final cleaning based on adsorption and ion exchange.

In Estonia the ground water used in community water supply generally contains 0.2 to 1.2 mg/l of iron. In the present method divalent iron precipitation is combined with the removal of radionuclides. During this process, the emerging Fe³⁺ floc (the term "flake" is also used), if treated correctly, starts a coagulation process. The iron floc creates a chemical bond with other metallic compounds in the water, and doing so it accumulates such weight subject to gravity, that surpasses all other influences.

The present invention provides a method for removal of radionuclides along with iron and manganese from ferrous ground water. The invention is defined by the appended claims.

To this end, the water pumped from a bore well is treated in the installation comprising at least one aerator, at least one contact chamber, at least one degasifier and a filtering system comprising at least one filter.

The method includes the steps, in which:
- water is aerated,
- the aerated water is conducted into the contact chamber,
- said water is kept for a minimal predetermined period of time in the contact chamber to produce iron (III) hydroxide (Fe(OH)₃) flocs and manganese dioxide (MnO₂) flocs on the bases of the iron and manganese and their compounds in the water and to bond the radionuclides present in the water with said flocs,
- air and other gases are separated from the water,
- the water is led into the filtering system, where iron (III) hydroxide (Fe(OH)₃) flocs and manganese dioxide (MnO₂) flocs and radionuclides bonded with these are precipitated, and water is filtrated by adsorption of radionuclides remaining in the water to the layer of manganese dioxide (MnO₂) on the surface of the grains of filter material.

In a step of water filtration a water filtering system is used, comprising a number of filter materials containing a catalytic material, wherein the concentration of manganese dioxide (MnO₂) in the direction of water flow through the filtering system increases to ensure that the number of active centers of radium adsorption increases when the radium concentration decreases on water moving along the filtering system.

Preferably a water filtering system is used, which comprises a number of filter material layers, where in the direction of the water flow at least one layer comprises a dolomite based granular filter material coated with manganese dioxide, and in the direction of water flow at least one subsequent filter material layer which has higher manganese dioxide concentration than the previous filter material layer comprising manganese dioxide, preferably pure manganese dioxide in a granular form.

The filter may include and typically comprises other layers of filter material, such as a layer of gravel at the bottom of the filter, on which layers of filter material comprising above mentioned manganese dioxide are placed.

In the filtering system said layers of filter material may be located in individual filters placed after each other. In other words, all layers of filter material need not be physically located in the same filter.

In the preferred embodiment of the method according to the present invention a filtering system of water is used, which comprises two layers of filter material containing manganese dioxide (MnO₂), whereas the first layer consists of a dolomite based and with manganese dioxide coated granular filter material, and the subsequent layer containing manganese dioxide consists in pure manganese dioxide in a granular form.

In the preferred embodiment of the method according to the present invention the step of separation of excess air and other gases (Rn, H₂S, CO₂, methane, etc.) takes place in the contact chamber and in the subsequent degasifier.

In the aerating step the water is aerated with aerial oxygen.

Formed manganese dioxide flocs and iron (III) hydroxide flocs are extremely fragile and do not endure much turbulence. To avoid breaking of the flocs in the moving water, which would significantly reduce the amount of radionuclides bonded with them, the flow rate of the water mass in the contact chamber is limited. The water is kept in the contact chamber for treatment for a time between 1 to 15 minutes. Preferably the water to be treated stays in the contact chamber for 1 to 5 minutes, most preferably for 1 to 3 minutes.

In the most preferred embodiment of the method according to the present invention the water is aerated in the aerator, where air is led into the water. The aerated water is passed to the lower part of the contact chamber, where said water stays for a minimum predetermined period until the contact chamber is filled up from the bottom to the top. At the same time air and other gases separated from the water are discharged from the top of the chamber. The water passed through the contact chamber is led to a degasifier, where the final separation of air and other gases takes place. From the degasifier water is led into the filtering system.

Preferably so-called centrifugal degasifier is used as a degasifier.

### A MORE DETAILED DESCRIPTION OF THE STEPS OF THE METHOD

### Step 1 - aerating water

For purification water, containing a number of gases dissolved under pressure, usually CO₂, H₂S, Rn, methane and the like, is passed through the injector, which enriches water with the aerial oxygen.

### Step 2 - treating of aerated water in a contact chamber

The water is piped through the injector into the contact chamber. The contact chamber is a metal reservoir, wherein there are grates of 50% perforation and positioned at the bottom and at the top for a more uniform distribution of water. As water was enriched with aerial oxygen through the injector, said oxygen turns the divalent iron over its multivalent positive complexes Fe(OH)ₙ^{m+} finally into the trivalent iron, which results in formation of iron (III) hydroxide and in formation of a insoluble quadrivalent manganese dioxide (MnO₂) from divalent manganese.

For formation of iron (III) hydroxide flocs and manganese dioxide flocs water must stay in the contact chamber at least for 180 seconds. As a result small flocs occur. The following reactions take place:

4Fe^{2 +} + O₂ + 10H₂O = 4Fe(OH)₃ ↓ + 8H⁺ + 8CO₂ ↑

2Mn²⁺ + O₂ + 2H₂O = 2MnO₂ ↓ + 4H⁺ + 4CO₂ ↑

The iron (III) hydroxide flocs and manganese dioxide flocs bond with radionuclides contained in the water. Oxidation reactions are slow, if the pH level is less than 9.5. Fe(OH)₃ precipitates in the form of large flocs (that is flocculation takes place), MnO₂ precipitates as a fine-grained sediment.

It is known that water contains radium (Ra²²⁶ and Ra²²⁸) as large hydrophobic divalent cations, which bond especially easy with manganese dioxide flocs as well as with iron (III) hydroxide flocs and this property can be used for separation of radionuclides from water.

The precondition for the process to be successful is that concentration of iron/manganese in the water is sufficient. In the case of low iron content of the water it is possible to separate radionuclides by adding iron into the water or by increasing the concentration of manganese dioxide in the filter material. Flow of water between the contact chamber and the filtering system is kept laminar that is nonturbulent so as not to break the flocs.

While water is filling up the contact chamber and iron (III) hydroxide flocs as well as manganese dioxide flocs are forming and radionuclides are bonding with the flocs, air as well as other gases are released from the water and discharged from the top of the contact chamber.

### Step 3 - final separation of air and other gases from the water coming from the contact chamber

The water, from which a part of the air and other gases have been released already in the contact chamber, is passed into a degasifier, where with the help of centrifugal movement of water, gases dissolved in the water are separated. To that end the present invention uses preferably a centrifugal degasifier, where rotary flow of the water along the cylindrical inner surface of the degasifier generates a centrifugal force, which separates air and other gases from the water, which are then collected by a vertical collecting tube in the center of the degasifier and from which they are discharged.

### Step 4 - water filtration in the filtering system

The water passed through the degasifier is led into the filter unit, where the precipitation of iron (III) hydroxide flocs and manganese dioxide flocs and radionuclides bonded with them takes place and the radionuclides still remained in the water are adsorbed on the MnO₂ layer on the surface of the filter material. Purified water is led into the waterworks.

In the filtering system several different layers of material are used, each containing MnO₂ (up to 100% pure MnO₂), having specific thickness of layers, grain size and filtering rates (residence time).

Thickness of filter materials of layers, particle sizes and filtering rate of water basis for a specific object are found out according to the characteristics of the raw water.

One of the characterizing features of the present invention is to ensure a high separation level of radionuclides (80-98%) even at low levels of iron and manganese in the raw water, a number of different catalytic materials for filters are used, whereat MnO₂ concentration in said materials in the direction of water flow through the filtering system increases ensuring sufficient force to drive adsorption by increasing the number of active centers of radium adsorption upon decreasing the radium concentration along the column.

The method allows to bond up to 75% of radionuclides in the water with the help of the iron (III) hydroxide flocs and manganese dioxide flocs. Subsequent filtration allows reduction of the radioactivity up to 95% thanks to the simultaneous precipitation of flocs and adsorption of radionuclides not bonded with the flocs to the layer of MnO₂ in the filter.

### Brief Description of Drawings

Further the method according to the invention is described with references to the schematic diagrams of the technology, whereas:
Figure 1 depicts a schematic flow chart of the technology for removing iron, manganese and radionuclides from the ground water;
Figure 2 depicts a conceptual scheme of the technology according to the first embodiment of the method according to the invention; and
Figure 3 depicts a conceptual scheme of the technology according to the second embodiment of the method according to the invention.

### Best Mode for Carrying Out the Invention

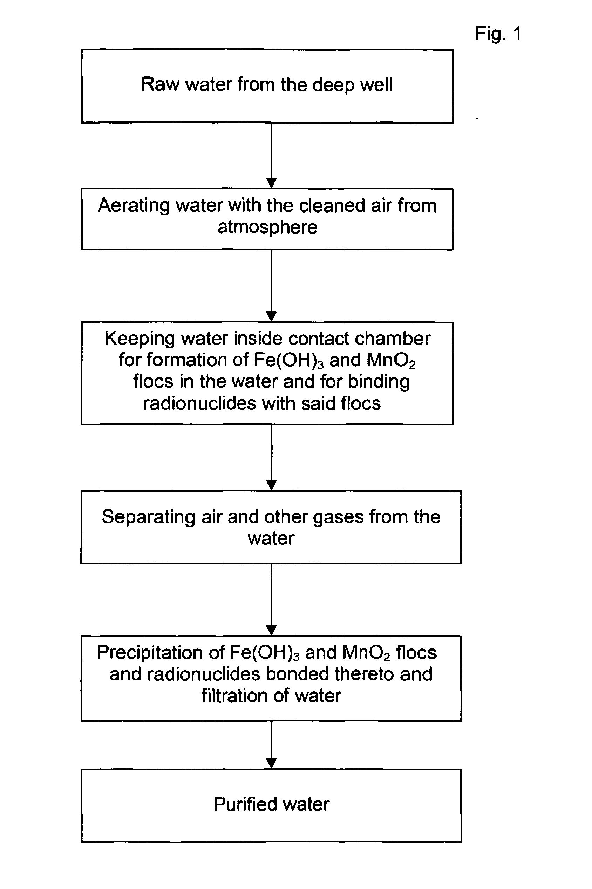

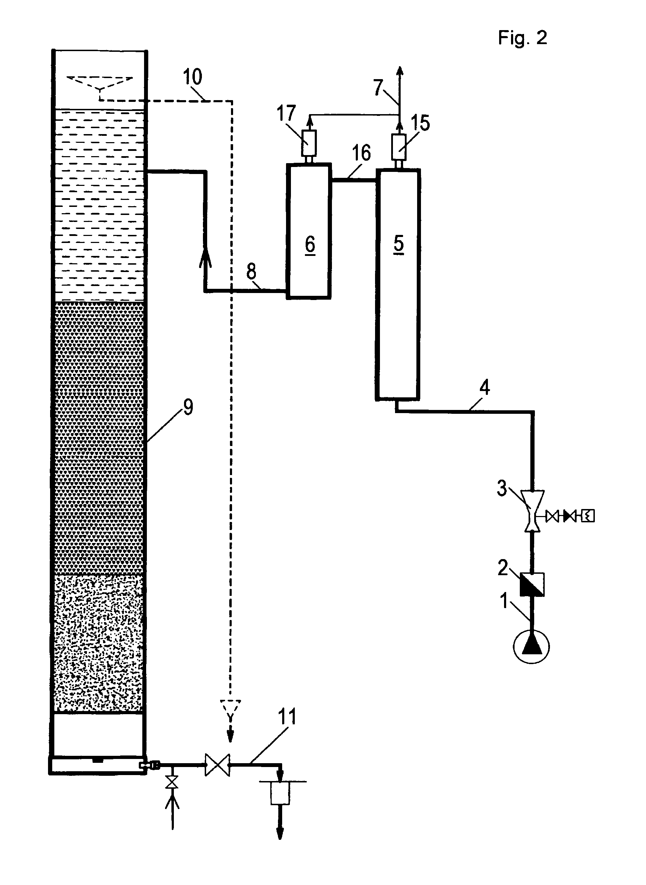

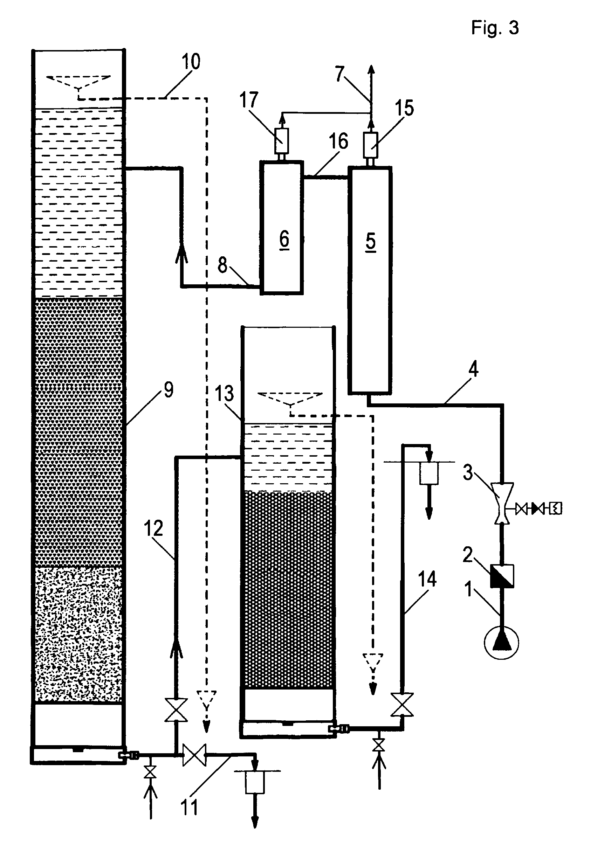

Figure 1 shows a conceptual scheme of the technology of removal radionuclides, the working of which is explained in technological diagrams on Figures 2 and 3. Diagrams on Figures 2 and 3 are simplified for reasons of clarity, that is only necessary parts for realization of method according to the invention are shown and most of the piping, valves and connections necessary for the regeneration of filter are not shown. Water supply is depicted with a thick line, air and gas piping are depicted with a thin line and piping for support functions (such as overflow, removal of rinsing water of filters, etc.) are depicted with a dashed line.

In the technological scheme of Figure 2 raw water from the bore well passes through flow gauge 2 on tube 1, whereupon the water is aerated by the injector 3. Injector 3 sucks up ambient air, which is mixed with water, and the aerated water is passed through a pipe 4 to contact chamber 5 through the inlet at the bottom of the chamber.

As a result of the oxygen introduced into the water by the injector 3 on the basis of iron and manganese contained in the water, iron (III) hydroxide flocs and manganese dioxide flocs start to form in the water in the contact chamber, whereas said flocs start to bond with radionuclides in the water. As said flocs are extremely fragile and do not endure much turbulence, then in order to avoid breaking of said flocs by the water flow, which would significantly reduce the number of radionuclides bonding with them, the rate of water flow in the contact chamber is limited. The water to be treated stays in the contact chamber for 1 to 4 minutes.

Simultaneously with the formation of iron (III) hydroxide flocs and manganese dioxide flocs, when water flows from the lower part of the contact chamber 5 to the upper part of the contact chamber 5, separation of gases such as hydrogen sulphide, carbon dioxide, radioactive radon takes place and those gases are discharged from the contact chamber 5 via valve 15.

After partial separation of air and other gases from the water in the contact chamber 5, said water containing iron (III) hydroxide flocs and manganese dioxide flocs is fed via pipe 16 to the degasifier 6, where centrifugation is used to separate the gases contained in the water. For this purpose in the present invention, preferably a centrifugal degasifier is used, where the rotating water flow along the cylindrical inner surface of the degasifier creates a centrifugal force which separates air and other gases from the water, and those gases are collected with vertical collecting pipe in the center of the degasifier and are discharged through valve 17 and via pipe 7 into the atmosphere. The flow rate of the water on the cylindrical surface has been chosen in the limits at which the breaking up of the iron (III) hydroxide flocs and a manganese dioxide flocs is avoided. Centrifuged water purified from air and other gases but still containing iron (III) hydroxide flocs and manganese dioxide flocs bonding with radionuclides, reaches under the influence of gravity the lower part of the degasifier 6, and is passed through pipe 8 into the filter 9 of the filtering system. Precipitation of iron (III) hydroxide flocs and manganese dioxide flocs and radionuclides bonded with said flocs as well as adsorption of radionuclides remnant in the water on the MnO₂ layer on the surface of the filter material take place in filter 9. Purified water is fed through pipe 11 into the waterworks, and the possible overflow, which is an indication of the decrease of efficiency of the filtering system, meaning that filter is clogged up, is led into the drain pipe 10.

In the filtering system several different layers of material, each containing MnO₂ (up to 100% pure MnO₂) are used, having specific thicknesses of layers, grain size and also when necessary, the filtering rate of the water, that is a period of time for which the water stays in the filter, is adjusted.

Thicknesses of filter material of layers, particle sizes and filtering rate of water for a specific object are found out according to the characteristics of the raw water.

For example, the filter 9 in the filtering system of Figure 2 comprises two filter layers comprising manganese dioxide, the first upper filter layer consist of granular dolomite, the surface of the granules being coated with the manganese dioxide, and the second lower filter layer is a pure manganese dioxide in a granular form.

The technological system according to Figure 3 is analogous to the one according to Figure 2, but in this embodiment filter 9 is followed by a second filter 13, filter layers of the filter 9 comprising manganese dioxide consist of granular dolomite accordingly having the surface of granules coated with manganese dioxide, and the subsequent filter layer consists of pure manganese dioxide in a granular form. Third filter layer, for example zeolite, is located in the filter 13, where the water passed through filter 9 is fed via pipe 12.

In this case, in the normal working mode, water is not discharged via pipe 11, but is discharged after second filter 13 via pipe 14. This technological scheme, which provides greater filtration efficiency, is used for the water, which contains large quantities of radionuclides.

Using two separate filters in the filtering system of water makes it possible to keep the filter material of the second filter 13, such as zeolite, in working order for a longer period of time and to reduce the regeneration frequency of the filter.

## Claims

1. Method for removal of radionuclides from the ferrous ground water along with iron and manganese, wherein water pumped from a bore well is treated in the installation comprising at least one aerator, at least one contact chamber, at least one degasifier and filtering system comprising at least one filter, where the method is ***characterized by*** steps, where:
- water is aerated,
- said aerated water is fed into the contact chamber,
- said water is kept for 1 - 15 minutes in the contact chamber to produce iron (III) hydroxide flocs and manganese dioxide flocs on the basis of the iron and manganese and their compounds in the water and to bond the radionuclides present in the water with said flocs, the water flow rate in the contact chamber is kept such that the flocs do not break,
- air and other gases are separated from the water,
- said water is passed into the filtering system, where iron (III) hydroxide flocs and manganese dioxide flocs and radionuclides bonded with these are precipitated, and said water is filtrated by adsorption of radionuclides remaining in the water to the layer of manganese dioxide on the surface of the grains of the filter material.

2. Method according to claim 1, ***characterized in that**,* in the water filtration step a filtering system of water is used, comprising a number of filter materials containing a catalytic material, wherein the concentration of manganese dioxide in the direction of the water flow through the filtering system increases to ensure that the number of active centers of radium adsorption increases when the radium concentration decreases on water moving along the filtering system.

3. Method according to claim 1, ***characterized in that**,* in the water filtration step a filtering system of water is used, which comprises a number of layers of filter material, wherein in the direction of the water flow at least one layer consists of a dolomite based and with manganese dioxide coated granular filter material, and in the direction of water the flow at least one subsequent layer of filter material has higher manganese dioxide concentration than the previous layer of filter material containing manganese dioxide, consisting preferably in pure manganese dioxide in a granular form.

4. Method according to claim 1, ***characterized in that**,* in the water filtration step a filtering system of water is used, which comprises two layers of filter material containing manganese dioxide, where the first layer of filter material containing manganese dioxide consists of a dolomite based and with manganese dioxide coated granular filter material, and the subsequent layer of material containing manganese dioxide consists in pure manganese dioxide in a granular form.

5. Method according to any preceding claim, ***characterized in that**,* the separation of air and other gases from the water is carried out in the contact chamber and in the subsequent degasifier.

6. Method according to any preceding claim, ***characterized in that**,* in the step of aerating water, said water is enriched with aerial oxygen.

7. Method according to any preceding claim 1 to 6, ***characterized in that**,* the
- water is aerated by directing said water into the aerator, which aerates water with the air,
- aerated water is led to the lower part of the contact chamber, where water flowing from the lower part of the contact chamber to the upper part of the contact chamber stays in the contact chamber for 1 - 15 minutes,
- air and other gases are separated from water by discharging released air and other gases from the upper part of the contact chamber and by degasifying said water in the subsequent degasifier, and
- from the degasifier said water is passed into the filtering system.

## Patentansprüche

1. Verfahren zur Beseitigung von Radionukliden zusammen mit Eisen und Mangan aus dem eisenhaltigen Grundwasser, worin aus einer Bohrquelle gepumptes Wasser im Gerät mit mindestens einem Belüfter, mindestens einer Kontaktkammer, mindestens einem Entgaser und einem Filtersystem mit mindestens einem Filter behandelt wird, bei der das Verfahren durch Stufen *gekennzeichnet* wird, so dass:
- Wasser belüftet wird,
- das genannte belüftete Wasser einer Kontaktkammer zugeführt wird,
- das genannte Wasser für 1-15 Minuten in der Kontaktkammer gehalten wird um Eisen(III)-hydroxid, Hydroxidflocken und Mangandioxid auf der Basis von Eisen und Mangan und deren Verbindungen im Wasser um die im Wasser enthaltenen Radionuklide mit deren Flocken zu binden und der Wasserdurchfluss in der Kontaktkammer so gehalten wird, dass die Flocken sich nicht auflösen,
- Luft und andere Gase vom Wasser getrennt werden,
- das genannte Wasser ins Filtersystem gelangt, wo Eisen(III)-hydroxidflocken und Mangandioxidflocken und mit diesen gebundene Radionuklide ausgeschieden werden, und die noch im Wasser gebliebene Radionukliden durch Adsorption als Schicht zum Mangandioxid auf die granulierte Oberfläche des Filtermaterials bleibt.

2. Verfahren nach Anspruch 1, ***dadurch gekennzeichnet,* dass** im Wasserfiltrationsschritt ein Wasserfiltersystem benutzt wird, welches eine Anzahl von Filtermaterialien mit katalytischem Material beinhaltet, worin die Konzentration von Mangandioxid in der Richtung des Wasserflusses durch das Filtersystem erhöht wird um die Anzahl der Aktivzentren für die Radiumabsorption zu erhöhen, wenn sich die Radiumkonzentration im Wasser, das durch das Filtersystem fließt, verringert.

3. Verfahren nach Anspruch 1, ***dadurch gekennzeichnet,* dass** im Wasserfiltrationsschritt ein Filtersystem genutzt wird, welches eine Anzahl von Schichten des Filtermaterials beinhaltet, worin in der Richtung des Wasserflusses wenigstens eine Schicht auf Dolomit basierende, mit Mangandioxid ummanteltes Granulatfiltermaterial beinhaltet, und in der Richtung des Wasserflusses mindestens eine nachfolgende Filterschicht beinhaltet, die eine höhere Mangandioxidkonzentration als die vorherige Filterschicht hat, die Mangandioxid enthält, indem sie bevorzugt aus reinem Mangandioxid in einer Granulatform besteht.

4. Verfahren nach Anspruch 1, ***dadurch gekennzeichnet,* dass** im Wasserfiltrationsschritt ein Filtersystem genutzt wird, welches zwei Mangandioxid beinhaltende Filtermaterialschichten enthält, in dem die erste Filterschicht, die Mangandioxid enthält, auf Dolomit basierendes und mit Mangandioxid ummanteltes Granulatfiltermaterial beinhaltet und die folgende Schicht aus einem Mangandioxid beinhaltetem Material, bevorzugt aus reinem Mangandioxid in Granulatform besteht.

5. Verfahren nach einem der vorhergehenden Ansprüche, ***dadurch gekennzeichnet,* dass** die Separation von Luft und anderen Gasen von Wasser durch eine Kontaktkammer und in dem nachfolgenden Entgaser durchgeführt wird.

6. Verfahren nach einem der vorhergehenden Ansprüche, ***dadurch gekennzeichnet,* dass** im Wasserbelüftungsschritt genanntes Wasser mit Luftsauerstoff angereichert wird.

7. Verfahren nach einem der vorhergehenden Ansprüche 1 bis 6, ***dadurch gekennzeichnet,* dass**
- Wasser durch die Leitung des benannten Wassers in dem Belüfter belüftet wird,
- belüftetes Wasser in den unteren Teil der Kontaktkammer geleitet wird, wo Wasser, das vom unteren Teil der Kontaktkammer in den oberen Teil der Kontaktkammer fließt, in der Kontaktkammer 1-15 Minuten lang bleibt,
- Luft und andere Gase vom Wasser durch Abführen der freigesetzten Luft und anderen Gasen vom oberen Teil der Kontaktkammer und durch entgasen des genannten Wassers im folgenden Entgaser separiert werden und
- das genannte Wasser vom Entgaser ins Filtersystem weitergeleitet wird.

## Revendications

1. Procédé d'élimination des radionucléides contenus dans une eau ferrugineuse souterraine, ainsi que du fer et du manganèse, dans lequel l'eau pompée d'un puits foré est traitée dans l'installation, comportant au moins un aérateur, au moins une chambre de contact, au moins un dégazeur, et le système de filtrage, comprenant au moins un filtre, où le procédé est ***caractérisé* par** étapes, où :
- l'eau est aérée,
- cette eau aérée est introduite dans la chambre de contact,
- cette eau est maintenue de 1 à 15 minutes dans la chambre de contact pour produire des flocs d'hydroxyde de fer (III) et des flocs de dioxyde de manganèse sur la base du fer et du manganèse et de leurs composés dans l'eau, et pour lier les radionucléides présents dans l'eau avec lesdits flocs, et la vitesse de circulation de l'eau dans la chambre de contact est maintenue telle que les flocs ne se cassent pas,
- l'air et les autres gaz sont séparés de l'eau,
- cette eau est passée dans le système de filtration, où les flocs d'hydroxyde de fer (III) et les flocs de dioxyde de manganèse et les radionucléides collés avec eux sont précipités, et ladite eau est filtrée par adsorption de radionucléides restants dans l'eau avec la couche de dioxyde de manganèse sur la surface des grains de matériau de filtrage.

2. Procédé selon la revendication 1, ***caractérisé en ce que**,* dans l'étape de filtration de l'eau est utilisé un système de filtration de l'eau, comprenant plusieurs matériaux de filtrage contenant un matériau catalytique, dans lequel la concentration de dioxyde de manganèse dans le sens de l'écoulement d'eau à travers le système filtrant augmente, pour assurer que le nombre de centres actifs de l'adsorption du radionucléides augmente lorsque la concentration en radium diminue dans l'eau se déplaçant le long du système de filtrage.

3. Procédé selon la revendication 1, ***caractérisé en ce que**,* dans l'étape de filtration de l'eau est utilisée un système de filtration de l'eau, qui comprend plusieurs couches de matériau de filtrage, dans lesquelles, dans la direction de l'écoulement de l'eau au moins une couche se compose de matériau granuleux filtrant à base de dolomite et revêtue avec du dioxyde de manganèse, et dans le sens de l'écoulement de l'eau au moins une couche subséquente de matériau de filtrage a une plus grande concentration en dioxyde de manganèse que la couche précédente de matériau de filtrage contenant du dioxyde de manganèse, formée de préférence de dioxyde de manganèse pur dans une forme granuleuse.

4. Procédé selon la revendication 1, ***caractérisé en ce que**,* dans l'étape de filtration de l'eau est utilisé un système de filtration de l'eau, qui comprend deux couches de matériau de filtrage contenant du dioxyde de manganèse, où la première couche de la matière filtrante contenant du dioxyde de manganèse se compose de matériau filtrant granuleux à base de dolomite et revêtu avec du dioxyde de manganèse, et la couche suivante de matériau contenant du dioxyde de manganèse consiste en pur dioxyde de manganèse dans une forme granuleuse.

5. Procédé selon l'une quelconque des revendications précédentes, ***caractérisé en* ce *que*** la séparation de l'air et des autres gaz de l'eau est effectuée dans la chambre de contact et dans le dégazeur subséquent.

6. Procédé selon l'une quelconque des revendications précédentes, ***caractérisé en ce que**,* dans l'étape d'aération de l'eau, cette eau est enrichie en oxygène de l'air.

7. Procédé selon l'une quelconque des revendications 1 à 6, ***caractérisé en ce que**,*
- l'eau est aérée en dirigeant ladite eau dans l'aérateur, qui aère l'eau avec l'air,
- l'eau aérée est amenée dans la partie inférieure de la chambre de contact, où l'eau s'écoulant de la partie inférieure de la chambre de contact à la partie supérieure de la chambre de contact reste dans la chambre de contact de 1 à 15 minutes,
- l'air et les autres gaz sont séparés de l'eau par libération de l'air et des autres gaz émis de la partie supérieure de la chambre de contact et par le dégazage subséquent de ladite eau dans le dégazeur, et
- à partir du dégazeur cette eau est passée dans le système de filtrage.
